# EUROPEAN PATENT SPECIFICATION

(11) **EP 4 307 026 B1**
(45) Date of publication and mention of the grant of the patent: **04.03.2026**
(21) Application number: 22184557.1
(22) Date of filing: 12.07.2022
(51) Int. Cl.: G02B 21/26, G02B 21/18, G02B 21/08, G02B 21/36

(54) **DIGITAL MICROSCOPE AND METHOD OF GENERATING A FULL OVERVIEW IMAGE OF A SAMPLE IN A DIGITAL MICROSCOPE**
DIGITALES MIKROSKOP UND VERFAHREN ZUM ERZEUGEN EINES GESAMTÜBERSICHTSBILDES EINER PROBE IN EINEM DIGITALEN MIKROSKOP
MICROSCOPE NUMÉRIQUE ET PROCÉDÉ DE GÉNÉRATION D'UNE IMAGE D'ENSEMBLE COMPLÈTE D'UN ÉCHANTILLON DANS UN MICROSCOPE NUMÉRIQUE

(43) Date of publication of application: 17.01.2024
(73) Proprietor: PreciPoint GmbH, 85354 Freising (DE)
(72) Inventor: Zalvidea, Dobryna, 85356 Freising (DE)
(74) Representative: Schmitt-Nilson Schraud Waibel Wohlfrom Patentanwälte Partnerschaft mbB

(56) References cited:
- CN-B- 106 092 994
- US-A1- 2007 211 460
- US-A1- 2022 113 525
- US-B2- 10 712 548
- MORENO I ET AL: "DESIGNING LIGHT-EMITTING DIODE ARRAYS FOR UNIFORM NEAR-FIELD IRRADIANCE", APPLIED OPTICS, OPTICAL SOCIETY OF AMERICA, WASHINGTON, DC, US, vol. 45, no. 10, 1 April 2006 (2006-04-01), pages 2265 - 2272, XP001242317, ISSN: 0003-6935, DOI: 10.1364/AO.45.002265

## Description

The present invention is in the field of digital microscopy. In particular, the present invention is in the field of digital microscopes that are capable of generating a comparably low resolution overview image of a sample, which may be provided in a comparably short amount of time, and of generating a comparably high resolution microscopic image of the sample, which may take longer to be generated.

Most modern digital microscopes have two ways of providing images of the samples present on the stage of the digital microscope. By definition, digital microscopes are capable of taking partial images of the sample through a microscope objective. In this way, high resolution partial images may be generated, and an overall high resolution image of the sample may be provided via stitching / joining the partial images.

In addition to this generation of microscopic images of the samples, herein also referred to as the main mode of operation, many modern microscopes are capable of providing low resolution overview images of the samples. When analyzing a new sample, it is possible to generate an overview image as a first step. Based on said overview image, a user of the digital microscope may obtain an initial impression of the sample. Said initial impression may be used to define areas of interest, to pre-select areas to be included in the generation of the high resolution microscopic images, etc. The provision of the overview image may be seen as a "quick and dirty" way of getting an initial grasp at the content of the sample, in order to generate the microscopic images in a more targeted manner / in order to save time in the ensuing generation of the areas of interest of the sample with a high resolution.

US 10,712,548 B2 discloses systems and methods for preparing a field image of a portion of a target area or region of interest of a microscope slide specimen, using a slide scanning microscope having a movable slide stage, an objective lens, a digital video camera and a digital image sensing element. The slide scanning microscope comprises an overview camera and an overview illuminator on the one hand as well as the digital video camera, the objective lens, and an objective illuminator on the other hand.

Moreno et al., "Designing light-emitting diode array for uniform near-field irradiance", Applied Optics, Optical Society of America, Washington, DC, vol. 45, no. 10 deals with the design of light sources consisting of multiple light-emitting diodes (LEDs) to uniformly illuminate a near target plane.

US 2007/211460 A1 discloses a multicolor LED light source for transmitted light illumination compatible with most microscopes. The light source provides spatially and angularly uniform monochromatic illumination in red, green, or blue color, or in their combinations. Switching of wavelengths is very fast, which is desirable for automated scanning of specimens. The light source is inexpensive and compact; it can be accommodated in the condenser space of a typical microscope, eliminating standard white light source, condenser and light filtering device.

In previous approaches, the overview image of a sample provided on a standard microscope slide, i. e. of a sample provided on a standard 1 inch by 3 inch microscope slide, is assembled from twelve partial overview images. In particular, in previous approaches, the overview image is generated from two rows of partial overview images, each row containing six partial overview images. While it is understood that the generation of the overview image is a quick and, by definition, imperfect procedure, the overview image generation is often times perceived as not satisfactory in terms of the speed of providing the full overview image and/or in terms of the image quality of the full overview image.

Accordingly, it would be beneficial to provide a digital microscope that has improved overview image generation capacities and to provide an improved method of generating a full overview image of a sample in a digital microscope.

Exemplary embodiments of the invention include a digital microscope in accordance with claim 1 and a method of generating a full overview image of a sample in a digital microscope in accordance with claim 13. Further embodiments of the invention are given in the dependent claims.

Exemplary embodiments of the invention include a digital microscope, comprising: a stage for holding a sample; and an overview image generation assembly, comprising: an overview digital camera, arranged on a first side of the stage and directed towards the stage, wherein the overview digital camera comprises an overview image sensor and overview camera optics, with the overview camera optics having a center axis; and an overview illumination assembly; wherein the overview illumination assembly comprises a plurality of overview illumination LEDs, wherein the plurality of overview illumination LEDs are arranged on a second side of the stage, opposite the first side, and wherein the plurality of overview illumination LEDs are arranged around the center axis of the overview camera optics of the overview digital camera.

Exemplary embodiments of the invention may allow for a quicker provision of the full overview image and/or for the provision of the full overview image with a higher image quality. With a plurality of overview illumination LEDs being arranged on the second side of the stage and with the plurality of overview illumination LEDs being arranged around the center axis of the overview camera optics of the overview digital camera, a more even illumination of the sample for taking partial overview images may be achieved. For a given overview image quality level, a larger portion of the image data, taken with the overview digital camera, may be used than in previous approaches. In this case, the full overview image may be assembled from a smaller number of partial overview images. For a given number of partial overview images, the more even illumination of the sample may lead to a better image quality, thus resulting in a full overview image of a higher image quality than in previous approaches.

As compared to previous approaches, where a single overview illumination LED was arranged at the center axis of the overview camera optics, the arrangement of a plurality of overview illumination LEDs around the center axis of the overview camera optics of the overview digital camera may provide for the more even illumination. The individual light outputs of the plurality of overview illumination LEDs may add up, with the individual peaks of the individual light outputs being off-center with respect to the center axis of the overview camera optics and with the individual light outputs of the plurality of overview illumination LEDs being superimposed to yield an overall more even light output distribution. In other words, the superposition of the individual light outputs of the plurality of overview illumination LEDs may allow for the provision of a more even illumination at the sample plane at the stage, than may be achieved with a single overview illumination LED, as used in previous approaches.

The overview digital camera has an overview image sensor and overview camera optics, with the overview camera optics having a center axis. The center axis extends from the overview image sensor through the overview camera optics and through the stage. The center axis of the overview camera optics may in particular be orthogonal to the stage. The center axis of the overview camera optics may also be referred to as the optical axis through the overview image generation assembly.

The overview digital camera is arranged on the first side of the stage and is directed towards the stage. In particular, the overview digital camera is directed towards the stage for taking partial overview images of the sample.

The overview digital camera comprises an overview image sensor and overview camera optics. The overview camera optics may be a single lens or may be a camera objective or may be any other suitable type of optics that generate an image of a portion of the sample on the overview image sensor. The camera optics may have a magnification of below 1. In particular, the camera optics may have a magnification of 0.1, 0.2, 0.5 or any other suitable magnification. While being referred to as magnification in the general context of microscopes, it is understood that the mentioned reproduction ratios are not magnifications in the strict sense of the word.

The overview illumination assembly comprises a plurality of overview illumination LEDs. The overview illumination LEDs are directed towards the stage. In particular, the overview illumination LEDs are directed towards the stage from the second side. In a particular embodiment, the plurality of overview illumination LEDs may be arranged to have their direction of largest light intensity substantially orthogonal to the stage. Further in particular, all of the plurality of overview illumination LEDs may be arranged to have their directions of largest light intensity substantially orthogonal to the stage.

The plurality of overview illumination LEDs may be white LEDs. In this way, the overview image may provide a highly natural representation of the sample on the stage. It is also possible that the plurality of overview illumination LEDs have different colors and/or that the plurality of overview illumination LEDs have a mix of colors.

The plurality of overview illumination LEDs are arranged around the center axis of the overview camera optics of the overview digital camera. In particular, the plurality of overview illumination LEDs may be arranged and spaced from each other in such a way that the strongest illumination at the stage occurs at the center axis of the overview camera optics. In particular, the number of overview illumination LEDs, their geometric arrangement around the center axis of the overview camera optics, and their individual light intensity distributions may be chosen to achieve the strongest illumination at that portion of the stage where the center axis of the overview camera optics runs through the stage.

The plurality of overview illumination LEDs are arranged around the center axis of the overview camera optics of the overview digital camera. In particular, the plurality of overview illumination LEDs may be arranged in a plane that is substantially parallel to the stage of the digital microscope. In other words, the plurality of overview illumination LEDs may all be arranged at substantially the same distance from the stage.

The overview digital camera is arranged on a first side of the stage, whereas the plurality of overview illumination LEDs are arranged on the second side of the stage. Accordingly, the overview image generation assembly works in accordance with a transmitted light principle, i.e. it works analogous to a transmitted light microscope.

The digital microscope further comprises: a microscopic image generation assembly, comprising: a main image sensor, directed towards the stage for taking microscopic images of the sample; a microscope objective, interposed between the stage and the main image sensor; and a main illumination assembly, arranged to illuminate the sample on the stage. With the microscopic image generation assembly, the microscopic images, which are the main purpose of the digital microscope, may be generated independently from the overview image generation assembly described above. The microscopic image generation assembly and the overview image generation assembly may be separate sub-systems of the digital microscope. The microscopic image generation assembly and the overview image generation assembly may operate independently from each other. The digital microscope may be configured to operate only one of the microscopic image generation assembly and the overview image generation assembly at any given time. The reason for this separation in operation may be that, for each of the microscopic image generation assembly and the overview image generation assembly, the illumination may be specifically adapted to the capturing of image data for the given purpose, both in terms of the illumination distribution and in terms of the timing between illumination and capturing of image data.

According to a further embodiment, the microscopic image generation assembly further comprises a tube objective, interposed between the microscope objective and the main image sensor. The microscope objective and the tube objective may together provide an image of a portion of the sample at the main image sensor. While the microscope objective and the tube objective may jointly provide the imaging functionality and may jointly provide for a desired magnification, it is customary to attribute a magnification value to the microscope objective. In exemplary embodiments of the invention, the microscope objective may have a magnification of between 10x and 100x, such as 10x, 20x, 40x, 60x, 80x, 100x or another suitable magnification value.

According to a further embodiment, the main image sensor, the microscope objective, and - if present - the tube objective are arranged on the first side of the stage. In other words, the main image sensor, the microscope objective, and - if present - the tube objective may be arranged on the same side of the stage as the overview digital camera. Further, the overview digital camera, the main image sensor, the microscope objective, and - if present - the tube objective may be arranged in a common main microscope housing.

According to a further embodiment, the main illumination assembly is arranged on the second side of the stage. In other words, the overview illumination assembly and the main illumination assembly may be arranged on the same side of the stage. Accordingly, in terms of the microscopic image generation, the digital microscopes may act as transmitted light microscope.

According to a further embodiment, the main illumination assembly and the overview illumination assembly may be arranged in a common illumination housing. In this case, the common illumination housing is arranged on the second side of the stage.

According to a further embodiment, the main illumination assembly is arranged on the first side of the stage. In other words, the overview illumination assembly and the main illumination assembly may be arranged on different sides of the stage. With the main illumination assembly being on the first side of the stage, the microscopic image generation may work in accordance with the principles of a reflected light microscope. In this case, the main illumination assembly may be arranged in above described main microscope housing, together with the overview digital camera, the main image sensor, the microscope objective and - if present - the tube objective.

The main illumination assembly may provide for an illumination of the stage/ sample with visible light. In particular, the main illumination assembly may provide for illumination with white light. However, it is also possible that the main illumination assembly provides for illumination with UV light, as may be desired when the digital microscope is a fluorescence microscope. It is also possible that the main illumination assembly comprises one or more laser light sources, as may be desired in a digital microscopes intended for label free diagnostics. Exemplary techniques, which may be implemented via the main illumination assembly and the main image sensor of the microscopic image generation assembly, are Raman spectroscopy, CARS (Coherent Anti-Stokes Raman Scattering), SRS (Stimulated Raman Scattering), SHG (Second Harmonic Generation), TPEF (Two Photon Excited Fluorescence), and FLIM (Fluorescence Lifetime Imaging).

According to a further embodiment, the microscope objective has a center axis and the center axis of the microscope objective is offset from the center axis of the overview camera optics. In particular, the center axis of the microscope objective may be substantially parallel to the center axis of the overview camera optics. Further in particular, the center axis of the microscope objective may be substantially parallel to the center axis of the overview camera optics in the z-direction of the digital microscope, i.e. in the direction orthogonal to the stage of the digital microscope. The offset between the center axis of the microscope objective and the center axis of the overview camera optics may be a predefined offset.

The predefined offset may help in a highly accurate mapping between the overview image of the sample, as generated with the overview image generation assembly, and the microscopic images, as generated with the microscopic image generation assembly. Said mapping for example may be important when selecting areas of interest in the overview image and using said information for controlling the microscopic image generation assembly for generating microscopic images of the areas of interest.

According to a further embodiment, the microscope objective and the overview camera optics and, thus, the overview image sensor and the main image sensor are arranged in close proximity to each other. By providing these components in close proximity to each other, i.e. by providing the center axis of the microscope objective and the center axis of the overview camera optics in close proximity to each other, a particularly convenient implementation of the stage may be provided. In particular, the displacement capacities of the stage, when moving in the x-y-plane, i.e. when moving in the main plane of extension of the stage, may be kept low, while still allowing for both the microscopic image generation assembly and the overview image generation assembly to capture image data of of the whole stage.

According to a further embodiment, the center axis of the microscope objective and the center axis of the overview camera optics have an offset of between 2 cm and 10 cm, in particular of between 4 cm and 8 cm. The offset may in particular be large enough to accomodate the overview image generation assembly and the microscopic image generation assembly side-by-side. The offset may further be so large that the light beam path of the overview image generation assembly and the light beam path of the microscopic image generation assembly do not interfere / are completely separated. The offset may be small enough for both the overview image generation assembly and the microscopic image generation assembly potentially being directed to the same microscope slide / to a single microscope slide at a particular point in time.

According to a further embodiment, the microscope objective and the overview camera optics have fixed relative positions. In particular, the microscope objective and the overview camera optics may have fixed positions in the x- and y-dimensions of the digital microscope. It is possible that the microscope objective and/or the overview camera optics are movable in the z-direction of the digital microscope, but that the relative positions of the center axis of the microscope objective and the center axis of the overview camera optics are fixed with respect to each other. In this way, the mapping between the overview image and the microscopic images may be constant throughout the operation of the digital microscope.

According to a further embodiment, the digital microscope is a transmitted light microscope. In other words, for the aspect of the microscopic image generation assembly, the digital microscope operates according to the principles of a transmitted light microscope. In this case, both the overview image generation assembly and the microscopic image generation assembly operate in accordance with the principles of a transmitted light microscope.

According to a further embodiment, the main illumination assembly is arranged on the second side of the stage and the main illumination assembly comprises a main illumination light source, arranged on the center axis of the microscope objective and directed towards the stage. Said main illumination light source may in particular be the only / single light source of the main illumination assembly. The main illumination light source may be a main illumination LED, in particular a main illumination white LED. By providing the main illumination light source on the center axis of the microscope objective, the comparably very small area of the sample, which is to be illuminated for taking an individual microscopic image, may be illuminated with a particularly high light intensity.

According to an alternative embodiment, the digital microscope is a reflected light microscope. In other words, for the aspect of the microscopic image generation assembly, the digital microscope operates in accordance with the principles of a reflected light microscope. In this case, while the overview image generation assembly operates with illumination via transmitted light, the microscopic image generation assembly operates with reflected light.

According to an alternative embodiment, the digital microscope is a fluorescence microscope. In other words, for the aspect of the microscopic image generation assembly, the digital microscope operates in accordance with the principles of a fluorescence microscope. In this case, the illumination with UV light, which is used for creating the fluorescence effect of the sample, which may be a pre-treated / dyed sample, may be effected from either side of the stage, i.e. from the first side of the stage and/or from the second side of the stage. In any case, the overview image generation assembly provides for illumination with transmitted light.

According to an alternative embodiment, the digital microscope is a spectroscopy-based microscope. In other words, for the aspect of the microscopic image generation assembly, the digital microscope operates in accordance with the principles of a spectroscopy-based microscope. Exemplary techniques, which may be implemented via the main illumination assembly and the main image sensor of the microscopic image generation assembly, are Raman spectroscopy, CARS (Coherent Anti-Stokes Raman Scattering), SRS (Stimulated Raman Scattering), SHG (Second Harmonic Generation), TPEF (Two Photon Excited Fluorescence), and FLIM (Fluorescence Lifetime Imaging).

According to a further embodiment, the plurality of overview illumination LEDs are arranged around the center axis of the overview camera optics in a rotationally symmetric manner. With a rotationally symmetric arrangement of the plurality of overview illumination LEDs, the resulting illumination output may be particularly well-behaved.

According to a further embodiment, the plurality of overview illumination LEDs are arranged along a circular contour or along an elliptical contour or along a polygonal contour around the center axis of the overview camera optics. In particular, the plurality of overview illumination LEDs may be arranged at the corners of a polygonal contour. Further in particular, the plurality of overview illumination LEDs may be arranged at the corners of a regular polygon, such as a regular triangle, a regular rectangle / square, a regular pentagon, a regular hexagon, or another regular polygon having more than six corners. It is also possible that the plurality of overview illumination LEDs are arranged along a polygonal contour in a different manner. For example, it is possible that eight overview illumination LEDs or twelve overview illumination LEDs are arranged in an equidistant manner along the contour of a regular rectangle, i.e. arranged in an equidistant manner along the contour of a square.

According to a further embodiment, the plurality of overview illumination LEDs are spaced from the center axis of the overview camera optics by between 10 mm and 40 mm, in particular by between 15 mm and 30 mm. In a particular example, the plurality of overview illumination LEDs may be arranged along a circular contour, with the circular contour having a diameter of 45 mm. It has been found that the given values provide for a particularly good trade-off between an extended illumination of the sample at the stage, which is highly useful for the generation of partial overview images, and a highly even illumination thereof. In particular, the given values have been found to provide for an arrangement of the plurality of overview illumination LEDs, where the individual light outputs add up at and closely around the center axis of the overview camera optics in such a way that the added up illuminance is similar to the peak illuminance, as given on the stage by an individual overview illumination LED in its direction of highest light intensity.

According to a further embodiment, the plurality of overview illumination LEDs are spaced from the stage by between 20 mm and 60 mm, in particular by between 30 mm and 50 mm. The given values for the spacing between the plurality of overview illumination LEDs and the stage have been found to cooperate well with the values given above for the spacing of the plurality of overview illumination LEDs from the center axis of the overview camera optics. In particular, the given values may allow for a good trade-off between a highly even illumination of the sample on the stage and a compact implementation of the overview image generation assembly.

According to a further embodiment, the plurality of overview illumination LEDs are between 3 and 20 overview illumination LEDs, in particular between 4 and 12 overview illumination LEDs. It has been found that a particularly good trade-off between even illumination of the sample, compactness of the overview image generation assembly, power consumption and implementation complexity may be achieved with the given numbers of overview illumination LEDs.

According to a further embodiment, the plurality of overview illumination LEDs are arranged in an illumination assembly housing. In particular, the plurality of overview illumination LEDs may be arranged along a peripheral portion of the illumination assembly housing. By arranging the plurality of overview illumination LEDs along a peripheral portion of an illumination assembly housing, the plurality of overview illumination LEDs may be well-housed and well-protected from the outside environment, while making good use of the available space of the illumination assembly housing.

According to a further embodiment, the overview illumination assembly is free of a light source on the center axis of the overview camera optics. In other words, the overview illumination assembly does not have a light source that is arranged on the center axis of the overview camera optics. In yet other words, the overview illumination assembly is free of a light source that has its main light emission direction along the center axis of the overview camera optics. At the intersection of the stage and the center axis of the overview camera optics, none of the plurality of overview illumination LEDs provides its peak light intensity. Rather, at the intersection of the stage and the center axis of the overview camera optics, less than maximum light intensities of the plurality of overview illumination LEDs add up to provide an overall illuminance of said intersection point that blends well into the total illumination of the sample by the overview illumination assembly.

The overview illumination assembly, in operation, illuminates a target illumination area, extending 2.5 cm by 2.5 cm around the center axis of the overview camera optics on the stage, in such a way that a lowest illuminance value within the target illumination area is at least 80%, in particular at least 90%, of a hightest illuminance value within the target illumination area. It has been found that with the lowest illuminance value being at least 80%, in particular at least 90%, of the maximum illuminance value within the defined target illumination area, a very good image quality in the partial overview images may be achieved. In particular, with the given ratios of lowest and highest illuminance values within the target illumination area, the image quality may be perceived as sufficient to use the full image data for the 2.5 cm by 2.5 cm target illumination area for the generation of the full overview image. This in turn may mean that a comparably low number of partial overview images may be sufficient for generating the full overview image. The comparison of the lowest illuminance value within the target illumination area and the highest illuminance value within the target illumination area may be seen as a good measure for how even the illumination of the sample by the overview illumination assembly is.

The digital microscope is configured to generate a full overview image of a sample, provided on a microscope slide, by assembling a plurality of partial overview images of the sample, taken by the overview digital camera. The assembling may refer to any suitable way of combining the plurality of partial overview images of the sample. For example, the plurality of partial overview images of the sample may be stitched or combined in any other suitable manner via image processing techniques that are known per se. The assembling of the plurality of partial overview images may take place at the physical location of the digital microscope or may take place at a remote location, in which case the digital microscope transmits the plurality of partial overview images of the sample to said remote location. Completing the processing chain of generating a full overview image of the sample, the data processing apparatus at said remote location may, by definition, be considered a part of the digital microscope, as described herein. With the standard size of a microscope slide being 3 inch by 1 inch, i.e. 7.62 mm by 2.54 mm, and with above described highly even illumination of a target illumination area of approximately 1 inch by 1 inch, it may become possible to assemble the full overview image from merely three partial overview images of the sample and to yield a high image quality.

According to a further embodiment, the digital microscope is configured to generate the full overview image of the sample by assembling between 2 and 6, in particular by assembling between 3 and 5, partial overview images of the sample. As compared to previous approaches, where an assembling of the full overview image of the sample from 12 partial overview images was employed, a very significant reduction in the number of required partial overview images may be achieved. This may help along various steps in the generation of the full overview image, i.e. during the capturing of image data, during the assembling of the partial overview images, etc. With said reduction of partial overview images, the generation time for providing the full overview image may be reduced by 50% or more, as compared to previous approaches.

The plurality of partial overview images are a single row of partial overview images of the sample. Using a single row of partial overview images of the sample may help in generating the full overview image in a number of ways. First, when using a single row of partial overview images, the stage may be driven in a single direction for taking the different partial overview images. In other words, the moving direction of the stage does not have to be reversed during the capturing of the plurality of partial overview images. With reversing the direction of the stage being a time-consuming process and being dependent on a high moving accuracy of the stage, using a single row of partial overview images is a much more reliable, fast, and robust way of generating the full overview image. Second, the computational burden of assembling the partial overview images may be significantly reduced, when using only a single row of partial overview images. In this case, the assembling of partial overview images needs to be done in one dimension only, whereas the provision of multiple rows of partial overview images would require a multi-dimensional stitching of the partial overview images. Also, in the absence of any inter-row boundaries between the partial overview images, the overall image quality of the full overview image may be enhanced.

Exemplary embodiments of the invention further include a method of generating a full overview image of the sample in a digital microscope, the method comprising: illuminating the sample with a plurality of overview illumination LEDs, wherein the plurality of overview illumination LEDs are arranged around a center axis of overview camera optics of an overview digital camera; taking a plurality of partial overview images of the sample with the overview digital camera; and generating the full overview image of the sample by assembling the plurality of partial overview images. The additional features, modifications and effects, as described above with respect to the digital microscope, apply to the method of generating a full overview image of a sample in a digital microscope in an analagous manner.

According to a further embodiment, taking a plurality of partial overview images of the sample includes taking between 2 and 6, in particular between 3 and 5, partial overview images of the sample.

Taking a plurality of partial overview images of the sample includes taking a single row of partial overview images of the sample.

Further exemplary embodiments of the invention are described with respect to the accompanying drawings, wherein:
Fig. 1 shows a perspective view of a digital microscope in accordance with an exemplary embodiment of the invention;
Fig. 2 shows a schematic diagram of selected components of the digital microscope of Fig. 1;
Fig. 3 is a schematic illustration of a light output distribution of an overview illumination assembly, as may be used in digital microscopes according to exemplary embodiments of the invention;
Fig. 4 illustrates the generation of a full overview image, when using the overview illumination assembly of Fig. 3;
Fig. 5 is a schematic illustration of a light output distribution of an overview illumination assembly according to a comparative example;
Fig. 6 illustrates the generation of a full overview image, when using the overview illumination assembly of Fig. 5.

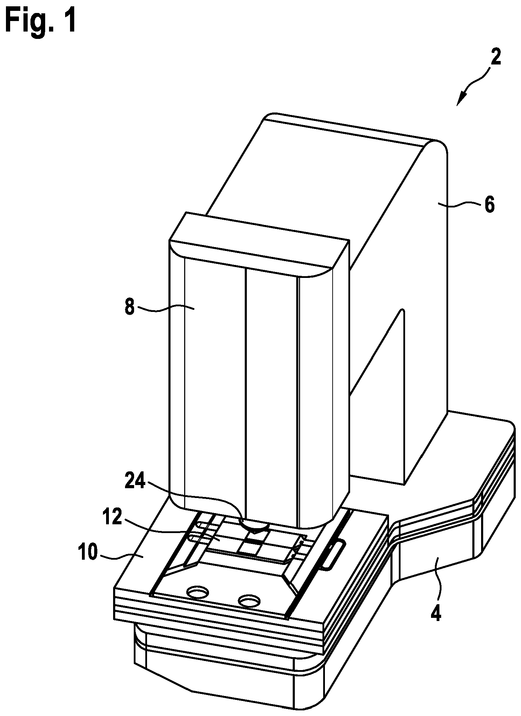

Fig. 1 shows a digital microscope 2 in accordance with an exemplary embodiment of the invention in a perspective, three-dimensional view. The digital microscope 2 has a base 4, which supports the digital microscope 2. The base 4 may be placed on a table for providing a secure stand.

In the exemplary embodiment of Fig. 1, the base 4 comprises a main illumination assembly, an overview illumination assembly, and a stage drive assembly, which are blocked from view by a base housing in Fig. 1. With the base 4 housing the main illumination assembly and the overview illumination assembly in the exemplary embodiment of Fig. 1, the base housing may also be referred to as illumination housing. It is also possible that a dedicated portion of the base 4, which may be segregated from the rest of the base 4, is employed for housing the main illumination assembly and the overview illumination assembly and that said dedicated portion of the base 4 is referred to as illumination housing. It is also possible that the main illumination assembly and the overview illumination assembly have separate housing within the base 4.

A stage 10 is mounted to the base 4. The stage is movable with respect to the base 4. In particular, the stage 10 is movable in two dimensions, referred to as x- and y-directions herein. In operation, the stage 10 is moved by the stage drive assembly in the x- and y-directions. The moving plane of the stage 10 may also be referred to as the x-y-plane of the digital microscope 2.

The stage 10 has a light transmissive portion, in particular a transparent portion. One or more samples may be placed on the light transmissive portion of the stage 10. In the operating scenario depicted in Fig. 1, two slides 12 are arranged on the light transmissive portion of the stage 10 via a clipping mechanism. The slides 12 are holding structures for samples to be analyzed via the digital microscope 2. The plane of the light transmissive portion of the stage 10 may be an alternative definition for the x-y-plane of the digital microscope 2.

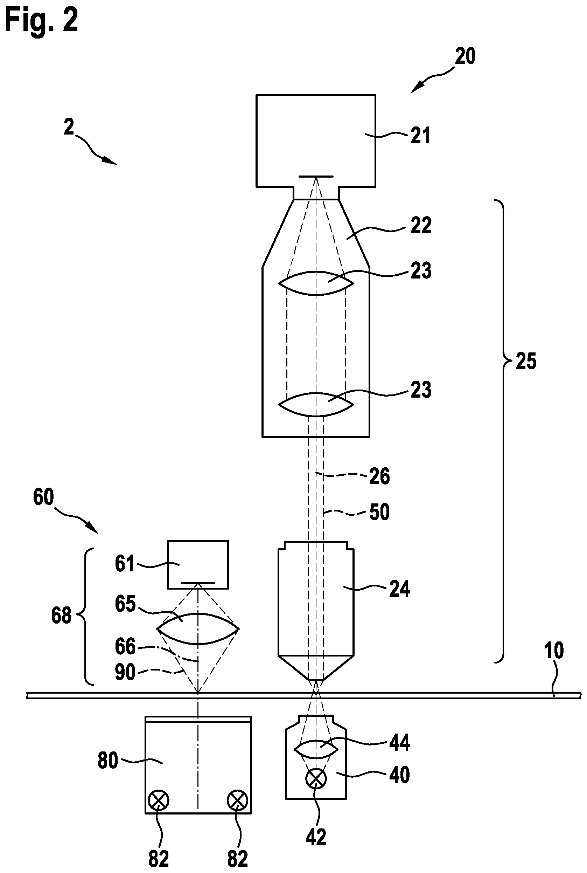

In the exemplary embodiment of Fig. 1, both the main illumination assembly and the overview illumination assembly illuminate the sample(s) from the bottom. The digital microscope 2 of Fig. 1 is a transmitted light microscope. Details of the illumination capacities of the digital microscope 2 will be described below with respect to Fig. 2.

The digital microscope 2 further comprises a support arm 6 and a main microscope housing 8. The support arm 6 is shaped to support the main microscope housing 8, such that the main microscope housing 8 hovers over the stage 10. The main microscope housing 8 houses various optical components of a microscopic image generation assembly and various optical components of an overview image generation assembly. The details of said assemblies will be discussed below with respect to Fig. 2. While most of said optical components of the microscopic image generation assembly and the overview image generation assembly are blocked from view in Fig. 1 by the base housing and the main microscope housing 8, a microscope objective 24, which is part of the microscopic image generation assembly, extends from the main microscope housing 8 towards the stage 10.

The main microscope housing 8 is movable with respect to the support arm 6 in a moving direction orthogonal to the x-y-plane. In other words, the main microscope housing 8 is movable in the z-direction of the digital microscope 2. While this movement is quite limited, it is sufficient to bring a sample in focus with respect to the optical system contained in the main microscope housing 8.

In operation, the stage drive assembly brings the stage 10 to desired positions in the x- and y-directions. The stage drive assembly may have any kind of suitable actuators, such as two small-scale electric motors for the two directions of movement. The main illumination assembly and the overview illumination assembly provide for illumination of the sample(s), present on the slide(s) 12, from underneath, and image data of that portion of a sample, placed in the way of light from the main illumination assembly / overview illumination assembly to a main image sensor / to an overview image sensor can be captured. Via driving the stage 10 to various positions, the sample can be scanned and image data of the whole sample can be generated. It is possible to generate a full overview image of the sample / slide and to generate a full microscopic image or one or more microscopic images of one or more portions of the sample / slide via the overview image generation assembly and the microscopic image generation assembly.

Fig. 2 shows selected components of the digital microscope 2 of Fig. 1 in a schematic view. In particular, Fig. 2 illustrates the components relevant for the illumination of the sample 12 and the guiding of light within the main microscope housing 8, both for the generation of the overview image and for the generation of microscopic images. The digital microscope 2 has a microscopic image generation assembly 20 and an overview image generation assembly 60.

The microscopic image generation assembly 20 comprises a main illumination assembly 40. In the exemplary embodiment of Fig. 2, the main illumination assembly 40 is arranged below the stage 10, i.e. below the sample(s) on the slide(s), and directs light upwards towards the sample(s) / slide(s). In the exemplary embodiment of Fig. 2, the main illumination assembly 40 has a main illumination light source 42 and a collimating lens 44 for directing a large amount of light towards that comparably very small portion of the sample, whose representation is captured. The main illumination light source 42 may be a white light source, such as a white LED, emitting broad band visible light. It is pointed out that the main illumination assembly 40 may have any suitable set-up / design.

The microscopic image generation assembly 20 further has an optical system 25. In the exemplary embodiment of Fig. 2, the optical system 25 has a tube objective 22 and a microscope objective 24. The tube objective 22 has individual tubus lenses 23.

The optical system 25 is provided for achieving a desired magnification of the portion of the sample whose representation is captured. The microscope objective 24 and the tube objective 22 jointly provide a magnification of a portion of the sample, with the magnified representation of the portion of the sample being captured by a main image sensor 21. In other words, the microscope objective 24 and the tube objective 22 jointly provide the optical magnification for the image data to be captured. While the magnification may be a product of both the design of the tube objective 22 and the design of the microscope objective 24, it is customary nomenclature to attribute a magnification factor to the microscope objective 24. On the basis of this nomenclature, the microscope objective 24 may be said to be a 20x magnification microscope objective, a 40x magnification microscope objective, a 60x magnification microscope objective or any other suitable magnification factor microscope objective.

The optical system 25 has a center axis 26. The center axis 26 may also be referred to as the center axis of the microscope objective 24. The center axis 26 is substantially orthogonal to the stage 10. In the exemplary embodiment of Fig. 2, the center axis 26 runs from the main illumination light source 42 through the collimating lens 44, through the stage 10, through the microscope objective 24, through the tube objective 22, and to the main image sensor 21. The center axis 26 may be the single direction that a light ray may travel through the optical system 25, without being refracted.

The microscopic image generation assembly 20 further has a main image sensor 21. The main image sensor 21 may be provided with a shutter. It may also have other components customary in the field of digital cameras, which may contribute to the operation of the main image sensor 21 when capturing image data. The tube objective 22 directs the light, coming from the microscope objective 24, towards the main image sensor 21. In this way, a light beam path 50 from the main illumination assembly 40 through the sample, through the microscope objective 24, through the tube objective 22, and to the main image sensor 21 is established. The main image sensor 21 may be a digital color sensor, for example built with CMOS technology. It is pointed out that the main image sensor may be any suitable image sensor for capturing the image data.

Besides the microscopic image generation assembly 20, the digital microscope 2 has an overview image generation assembly 60.

The overview image generation assembly 60 comprises an overview illumination assembly 80. The overview illumination assembly 80 is arranged below the stage 10, i.e. below the sample(s) on the slide(s), and directs light upwards towards the sample(s) / slide(s). The overview illumination assembly 80 comprises a plurality of overview illumination LEDs 82.

In the exemplary embodiment of Fig. 2, the plurality of overview illumination LEDs 82 are arranged in a plane substantially parallel to the stage 10, i.e. substantially parallel to the x-y-plane of the digital microscope 2, and are directed upwards towards the stage 10. In other words, the plurality of overview illumination LEDs 82 are arranged to have their main light emission directions, i.e. their light emission directions of highest light intensity, towards the stage 10. The main light emission directions may in particular be orthogonal to the x-y-plane of the stage 10.

In the cross-section-like schematic drawing of Fig. 2, only two overview illumination LEDs 82 are depicted. It is understood that a larger number of overview illumination LEDs, such as between 3 and 20 overview illumination LEDs 82, in particular between 4 and 12 overview illumination LEDs 82, may be arranged along a circular contour or along a polygonal contour in above described plane substantially parallel to the stage 10. The circular or polygonal contour runs around a center axis 66, which is substantially orthogonal to the stage 10 and which will be described in more detail below.

In the exemplary embodiment of Fig. 2, the plurality of overview illumination LEDs 82 are white LEDs. It is also possible that the overview illumination LEDs 82 are of a different colour and/or that the overview illumination LEDs 82 have LEDs of different colours.

The overview image generation assembly 60 further comprises an overview digital camera 68. The overview digital camera 68 comprises an overview image sensor 61 and overview camera optics 65. In the exemplary embodiment of Fig. 2, the overview camera optics 65 are a single lens. It is also possible that the overview camera optics 65 comprise a camera objective or any other suitable optical device for directing light, coming from the stage 10, towards the overview image sensor 61. The overview camera optics 65 have a center axis 66. The center axis 66 runs through the overview camera optics 65 and reaches the overview image sensor 61 substantially at its center. The center axis 66 may be the single direction that a light ray may travel through the camera optics 65, without being refracted.

The overview digital camera 68 is arranged above the stage 10. Accordingly, the overview digital camera 68 and the overview illumination assembly 80 are arranged on different sides of the stage 10. When disregarding the difference in magnification, the overview image generation assembly 60 works in accordance with the principles of a transmitted light microscope.

As stated above, the overview digital camera 68 has an overview image sensor 61. The overview image sensor 61 may be provided with a shutter. It may also have other components customary in the field of digital cameras, which may contribute to the operation of the overview image sensor 61 when capturing image data. For capturing image data, a light beam path 90 from the stage 10 to the overview image sensor 61 may be used. It is understood that the light beam path 90 is depicted in a highly simplified way in Fig. 2. It is further understood that light from an extended area of the stage 10 is directed towards the overview image sensor 61 by the overview camera optics 65. The extended area of the stage, whose image is captured via the overview image sensor 61, may have an extension of various centimeters in both the x-dimension and the y-dimension.

In the schematic representation of Fig. 2, the center axis 66 of the camera optics 65 is depicted as running from the center of the overview image sensor 61 through the overview camera optics 65, through the stage 10 and through the overview illumination assembly 80. The plurality of overview illumination LEDs 82 are offset from said center axis 66 of the overview camera optics 65. In particular, the plurality of overview illumination LEDs 82 are arranged around the center axis 66 of the overview camera optics 65. Further in particular, when arranged along a circular or polygonal contour, as described above, the plurality of overview illumination LEDs 82 are arranged along a circular or polygonal contour around the center axis 66. The circular or polygonal contour may be centered on the center axis 66 of the overview camera optics 65.

In operation, when taking a partial overview image of a sample with the overview image sensor 61, the plurality of overview illumination LEDs 82 may be jointly lit up. The individual light outputs of the plurality of overview illumination LEDs 82 may add up to provide a highly even illumination of that portion of the stage 10, i.e. of that portion of the sample / slide, whose image is captured by the overview digital camera 68. By having the plurality of overview illumination LEDs 82 arranged offset from the center axis 66 and by having the plurality of overview illumination LEDs 82 being arranged around the center axis 66, a superposition of the individual light outputs, yielding a highly even illumination of the relevant portion of the stage 10, may be achieved in a convenient manner.

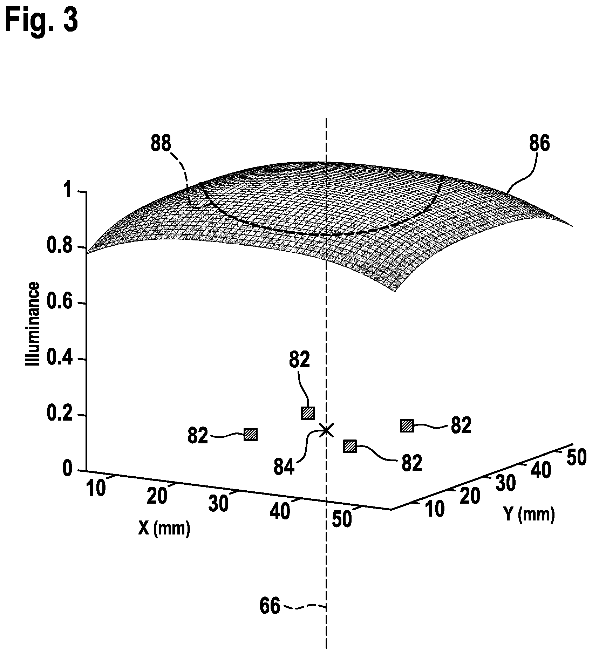

Fig. 3 is a schematic illustration of a light output distribution 86 of an overview illumination assembly, as may be used in digital microscopes according to exemplary embodiments of the invention. The exemplary light output distribution 86 is illustrated for an embodiment where four overview illumination LEDs 82 are provided in the overview illumination assembly. In the diagram of Fig. 3, the four overview illumination LEDs 82 are depicted as arranged on the x-y-plane of the diagram. The four overview illumination LEDs 82 are arranged along a circular contour, which is not shown in Fig. 3, around a center point 84. The center axis 66 of the overview camera optics, as described above with respect to Fig. 2, is also depicted in Fig. 3 and runs through said center point 84 of the arrangement of the four overview illumination LEDs 82.

The individual light outputs of the four overview illumination LEDs 82 add up to provide the light output distribution 86. In other words, the light output distribution 86 results from a superposition of the individual light outputs of the plurality of overview illumination LEDs 82. In the diagram of Fig. 3, the light output distribution 86 is given in terms of illuminance values, as present on the stage of the digital microscope. Further, the illuminance values are given as normalized values, with the peak illuminance value having the depicted value 1. In the exemplary implementation of Fig. 3, the peak illuminance value of the light output distribution 86 is where the center axis 66 of the overview camera optics intersects with the stage of the digital microscope.

Fig. 3 illustrates that the light output distribution 86 is a very flat distribution. In other words, the overview illumination assembly, employing the four overview illumination LEDs 82, provides for a highly even illumination of the stage due to the superposition of the individual light outputs of the overview illumination LEDs 82. In Fig. 3, a circle 88 is depicted. This circle 88 indicates a portion of the light output distribution 86 where the illuminance values are at least 90% of the peak illuminance value, i.e. where the normalized illuminance is at least 0.9 in the diagram of Fig. 3. In the exemplary implementation of Fig. 3, the circle 88 has a diameter of about 3.6 cm.

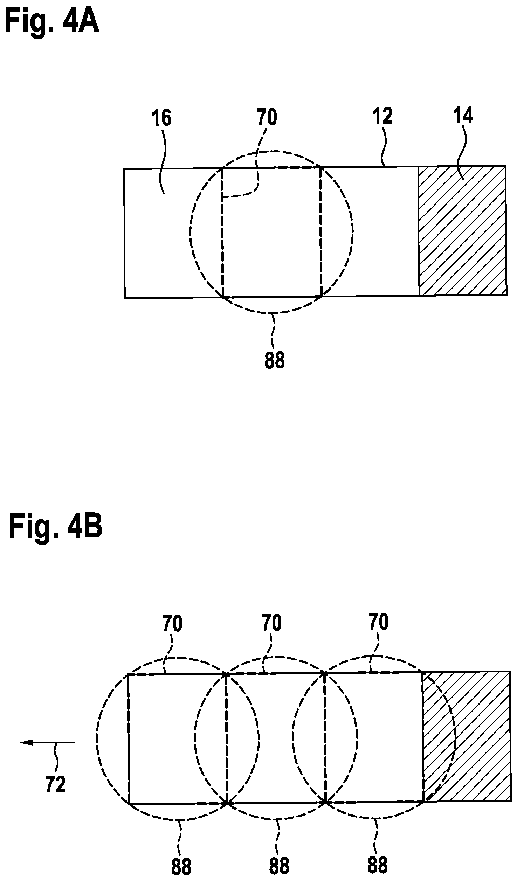

Fig. 4 illustrates the generation of a full overview image of an exemplary microscope slide 12, when using the overview illumination assembly of Fig. 3. The slide 12 has a transparent sample portion 16, on which a sample, such as a tissue sample, may be arranged. The slide 12 further has a handling portion 14, where no sample is arranged and which may be used for handling the microscope slide 12, e.g. for manual handling. The sample portion 16 has a standard microscope slide size of about three inches by one inch, i.e. a standard microscope slide size of about 7.62 mm by 2.54 mm.

In Fig. 4A, the circle 88 of Fig. 3 is depicted at an arbitrary location of the sample portion 16, in order to illustrate an exemplary portion of the microscope slide 12 where the highly even illuminance of the microscope slide 12, as described above with respect to Fig. 3, may be present. With this illumination, a partial overview image 70 may be taken, which is fully contained within the circle 88 and which covers the full width of the microscope slide 12. The partial overview image 70 represents an image of a highly evenly illuminated portion of a sample, present on this sample portion 16 of the microscope slide 12.

Fig. 4B illustrates that a full overview image of the sample portion 16 of the microscope slide 12 may be generated with only three partial overview images 70, wherein each of the three partial overview images 70 may be taken with a highly even illumination of the respective portion of the microscope slide 12. The three partial overview images 70 are a single row of partial overview images along the microscope slide 12. For generating the three partial overview images 70, the stage only needs to perform a linear motion 72 along the microscope slide 12. With the described setup, a very quick provision of a full overview image may be achieved, involving the capturing and assembling of only three partial overview images, wherein the highly even illumination over a comparably large portion of the microscope slide 12 allows for providing the full overview image with a very high image quality.

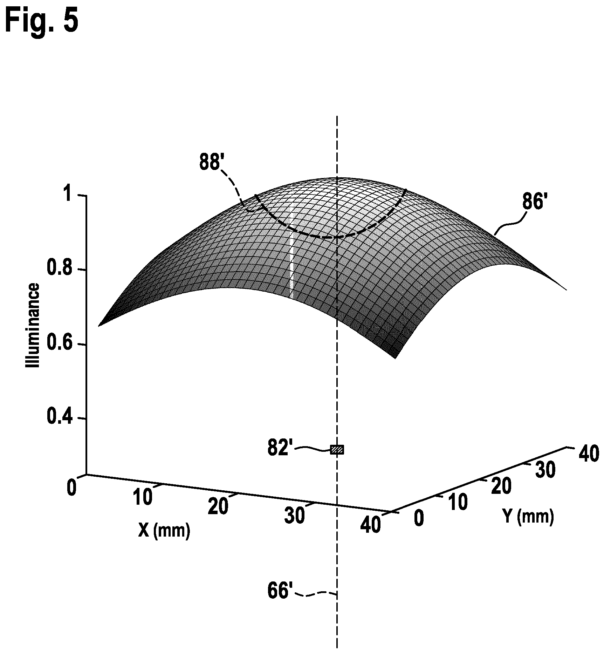

Fig. 5 is a schematic illustration of a light output distribution 86' of an overview illumination assembly according to a comparative example. As compared to the arrangement of four overview illumination LEDs 82 around a center point 84, as illustrated in Fig. 3, the overview illumination assembly of the comparative example of Fig. 5 only has one overview illumination LED 82'. This single overview illumination LED 82' is arranged on the center axis 66' of the camera optics of the overview image generation assembly according to the comparative example. In other words, the single overview illumination LED 82' is arranged at the position where the center point 84 is in the illustration of Fig. 3. The usage of a single overview illumination LED 82' for the generation of the overview image is common in previous approaches and, therefore, used as a comparative example.

With the single overview illumination LED 82', the resulting light output distribution 86' is much less even than the light output distribution 86, as illustrated in Fig. 3. In particular, the illuminance of the stage drops more rapidly towards all sides from the peak illuminance at the intersection of the center axis 66' of the overview camera optics and the stage. In Fig. 5, a circle 88' is depicted, again indicating that part of the light output distribution 86' where the illuminance values are at least 90% of the peak illuminance value. When comparing the circle 88' of Fig. 5 to the circle 88 of Fig. 3, it is evident that a highly even illumination can only be achieved over a much smaller area with the comparative set-up of Fig. 5.

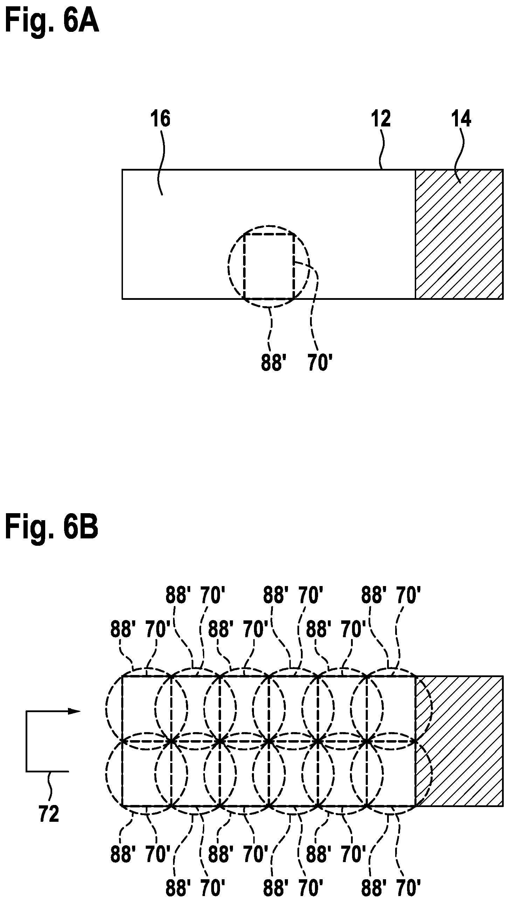

Fig. 6 illustrates the generation of a full overview image of an exemplary microscope slide 12, when using the overview illumination assembly of Fig. 5. The microscope slide 12 of Fig. 6 is the same as the microscope slide 12 of Fig. 4.

In Fig. 6A, the circle 88' of Fig. 5 is illustrated at an arbitrary position of the microscope slide 12. When only taking into account the portion of the sample on the microscope slide 12, where the highly even illumination according to the circle 88' is present, only a comparably small partial overview image 70' can be taken at a given position of the stage. It is understood that the extension of the partial overview image 70' may be this small, despite the overview image sensor potentially providing image data of a larger portion of the microscope slide 12. The reason for the small extension of the partial overview image 70' is that, in order to achieve a high quality overview image, only that portion of a partial overview image where a highly even illumination is present, here indicated with circle 88', is used for the generation of the full overview image and the rest of the image data may be discarded.

On the basis of above described considerations with respect to Fig. 5 and Fig. 6A, a total of twelve partial overview images 70' is needed, in order to generate a full overview image of the sample portion 16 of the microscope slide 12. This is illustrated in Fig. 6B, where said twelve partial overview images 70' are depicted. For taking the twelve partial overview images 70', the stage has to be moved along a u-shaped motion pattern 72'. As compared to this u-shaped motion pattern 72', the straight motion 72 of Fig. 4B prevents the reversal of direction and allows for the partial overview images 70 to only be stitched in a single dimension.

While the invention has been described with reference to exemplary embodiments, it is intended that the invention not be limited to the particular embodiment disclosed, but that the invention will include all embodiments falling within the scope of the appended claims.

## Claims

1. Digital microscope (2), comprising:
a stage (10) for holding a sample;
a microscopic image generation assembly (20), comprising:
a main image sensor (21), directed towards the stage (10) for taking microscopic images of the sample;
a microscope objective (24), interposed between the stage (10) and the main image sensor (21); and
a main illumination assembly (40), arranged to illuminate the sample on the stage (10);
and
an overview image generation assembly (60), comprising:
an overview digital camera (68), arranged on a first side of the stage (10) and directed towards the stage (10), wherein the overview digital camera (68) comprises an overview image sensor (61) and overview camera optics (65), with the overview camera optics (65) having a center axis (66); and
an overview illumination assembly (80);
**characterized in that** the overview illumination assembly (80) comprises a plurality of overview illumination LEDs (82), wherein the plurality of overview illumination LEDs (82) are arranged on a second side of the stage (10), opposite the first side, and wherein the plurality of overview illumination LEDs (82) are arranged around the center axis (66) of the overview camera optics (65) of the overview digital camera (68)
wherein the overview illumination assembly (60), in operation, illuminates a target illumination area, extending 2.5 cm by 2.5 cm around the center axis (66) of the overview camera optics (65) on the stage (10), in such a way that a lowest illuminance value within the target illumination area is at least 80% of a highest illuminance value within the target illumination area,
wherein the digital microscope (2) is configured to generate a full overview image of a sample, provided on a microscope slide (12), by assembling a plurality of partial overview images (70) of the sample, taken by the overview digital camera (68), and
wherein the plurality of partial overview images (70) are a single row of partial overview images of the sample.

2. Digital microscope (2) according to claim 1,
wherein the microscope objective (24) has a center axis (26) and wherein the center axis (26) of the microscope objective (24) is offset from the center axis (66) of the overview camera optics (65);
and/or
wherein the microscope objective (24) and the overview camera optics (65) have fixed relative positions.

3. Digital microscope (2) according to any of the preceding claims, wherein the digital microscope (2) is a transmitted light microscope.

4. Digital microscope (2) according to any of the preceding claims, wherein the plurality of overview illumination LEDs (82) are arranged around the center axis (66) of the overview camera optics (65) in a rotationally symmetric manner.

5. Digital microscope (2) according to any of the preceding claims, wherein the plurality of overview illumination LEDs (82) are arranged along a circular contour or along an elliptical contour or along a polygonal contour around the center axis (66) of the overview camera optics (65).

6. Digital microscope (2) according to any of the preceding claims,
wherein the plurality of overview illumination LEDs (82) are spaced from the center axis (66) of the overview camera optics (65) by between 10 mm and 40 mm, in particular by between 15 mm and 30 mm;
and/or
wherein the plurality of overview illumination LEDs (82) are spaced from the stage (10) by between 20 mm and 60 mm, in particular by between 30 mm and 50 mm.

7. Digital microscope (2) according to any of the preceding claims, wherein the plurality of overview illumination LEDs (82) are between 3 and 20 overview illumination LEDs, in particular between 4 and 12 overview illumination LEDs.

8. Digital microscope (2) according to any of the preceding claims, wherein the plurality of overview illumination LEDs (82) are arranged in an illumination assembly housing, wherein the plurality of overview illumination LEDs are in particular arranged along a peripheral portion of the illumination assembly housing.

9. Digital microscope (2) according to any of the preceding claims, wherein the overview illumination assembly (60) is free of a light source on the center axis (66) of the overview camera optics (65).

10. Digital microscope (2) according to any of the preceding claims, wherein the overview illumination assembly (60), in operation, illuminates the target illumination area in such a way that a lowest illuminance value within the target illumination area is at least 90% of a highest illuminance value within the target illumination area.

11. Digital microscope (2) according to any of the preceding claims,
wherein the digital microscope (2) is configured to generate the full overview image of the sample by assembling between 2 and 6, in particular by assembling between 3 and 5, partial overview images (70) of the sample.

12. Method of generating a full overview image of a sample in a digital microscope (2) according to any of the preceding claims, the method comprising:
illuminating the sample with the plurality of overview illumination LEDs (82);
taking a plurality of partial overview images (70) of the sample with the overview digital camera (68), wherein the plurality of partial overview images (70) are a single row of partial overview images of the sample; and
generating the full overview image of the sample by assembling the plurality of partial overview images (70).

13. Method according to claim 12,
wherein the plurality of partial overview images (70) are between 2 and 6, in particular between 3 and 5, partial overview images of the sample.

## Patentansprüche

1. Digitales Mikroskop (2), aufweisend:
einen Tisch (10) zum Halten einer Probe;
eine mikroskopische Bilderzeugungsanordnung (20), aufweisend:
einen Hauptbildsensor (21), der auf den Tisch (10) gerichtet ist, um mikroskopische Bilder der Probe aufzunehmen;
ein Mikroskopobjektiv (24), das zwischen dem Tisch (10) und dem Hauptbildsensor (21) angeordnet ist; und
eine Hauptbeleuchtungsanordnung (40), die derart angeordnet ist, dass sie die Probe auf dem Tisch (10) beleuchtet;
und
eine Übersichtsbilderzeugungsanordnung (60), aufweisend:
eine Übersichtsdigitalkamera (68), die auf einer ersten Seite des Tisches (10) angeordnet und auf den Tisch (10) gerichtet ist, wobei die Übersichtsdigitalkamera (68) einen Übersichtsbildsensor (61) und eine Übersichtskameraoptik (65) aufweist, wobei die Übersichtskameraoptik (65) eine Mittelachse (66) hat; und
eine Übersichtsbeleuchtungsanordnung (80);
**dadurch gekennzeichnet, dass**
die Übersichtsbeleuchtungsanordnung (80) eine Mehrzahl von Übersichtsbeleuchtungs-LEDs (82) aufweist, wobei die Mehrzahl von Übersichtsbeleuchtungs-LEDs (82) auf einer zweiten Seite des Tisches (10), entgegengesetzt der ersten Seite, angeordnet sind und wobei die Mehrzahl von Übersichtsbeleuchtungs-LEDs (82) um die Mittelachse (66) der Übersichtskameraoptik (65) der Übersichtsdigitalkamera (68) angeordnet sind,
wobei die Übersichtsbeleuchtungsanordnung (60) im Betrieb einen Zielbeleuchtungsbereich beleuchtet, der sich 2,5 cm mal 2,5 cm um die Mittelachse (66) der Übersichtskameraoptik (65) auf dem Tisch (10) erstreckt, sodass ein niedrigster Beleuchtungsstärkewert in dem Zielbeleuchtungsbereich mindestens 80 % eines höchsten Beleuchtungsstärkewerts in dem Zielbeleuchtungsbereich beträgt,
wobei das digitale Mikroskop (2) dazu ausgelegt ist, ein Gesamtübersichtsbild einer Probe, die sich auf einem Objektträger (12) befindet, durch Zusammensetzen einer Mehrzahl von Teilübersichtsbildern (70) der Probe zu erzeugen, die von der Übersichtsdigitalkamera (68) aufgenommen werden, und
wobei die Mehrzahl von Teilübersichtsbildern (70) eine einzelne Reihe von Teilübersichtsbildern der Probe sind.

2. Digitales Mikroskop (2) nach Anspruch 1,
wobei das Mikroskopobjektiv (24) eine Mittelachse (26) hat und wobei die Mittelachse (26) des Mikroskopobjektivs (24) gegenüber der Mittelachse (66) der Übersichtskameraoptik (65) versetzt ist;
und/oder
wobei das Mikroskopobjektiv (24) und die Übersichtskameraoptik (65) feste relative Positionen haben.

3. Digitales Mikroskop (2) nach einem der vorhergehenden Ansprüche, wobei das digitale Mikroskop (2) ein Durchlichtmikroskop ist.

4. Digitales Mikroskop (2) nach einem der vorhergehenden Ansprüche, wobei die Mehrzahl von Übersichtsbeleuchtungs-LEDs (82) um die Mittelachse (66) der Übersichtskameraoptik (65) in einer rotationssymmetrischen Weise angeordnet sind.

5. Digitales Mikroskop (2) nach einem der vorhergehenden Ansprüche, wobei die Mehrzahl von Übersichtsbeleuchtungs-LEDs (82) entlang einer kreisförmigen Kontur oder entlang einer elliptischen Kontur oder entlang einer polygonalen Kontur um die Mittelachse (66) der Übersichtskameraoptik (65) angeordnet sind.

6. Digitales Mikroskop (2) nach einem der vorhergehenden Ansprüche,
wobei die Mehrzahl von Übersichtsbeleuchtungs-LEDs (82) von der Mittelachse (66) der Übersichtskameraoptik (65) um zwischen 10 mm und 40 mm, insbesondere um zwischen 15 mm und 30 mm, beabstandet sind;
und/oder
wobei die Mehrzahl von Übersichtsbeleuchtungs-LEDs (82) von dem Tisch (10) um zwischen 20 mm und 60 mm, insbesondere um zwischen 30 mm und 50 mm, beabstandet sind.

7. Digitales Mikroskop (2) nach einem der vorhergehenden Ansprüche, wobei die Mehrzahl von Übersichtsbeleuchtungs-LEDs (82) zwischen 3 und 20 Übersichtsbeleuchtungs-LEDs, insbesondere zwischen 4 und 12 Übersichtsbeleuchtungs-LEDs, aufweisen.

8. Digitales Mikroskop (2) nach einem der vorhergehenden Ansprüche, wobei die Mehrzahl von Übersichtsbeleuchtungs-LEDs (82) in einem Beleuchtungsanordnungsgehäuse angeordnet sind, wobei die Mehrzahl von Übersichtsbeleuchtungs-LEDs insbesondere entlang eines Umfangsbereichs des Beleuchtungsanordnungsgehäuses angeordnet sind.

9. Digitales Mikroskop (2) nach einem der vorhergehenden Ansprüche, wobei die Übersichtsbeleuchtungsanordnung (60) frei von einer Lichtquelle auf der Mittelachse (66) der Übersichtskameraoptik (65) ist.

10. Digitales Mikroskop (2) nach einem der vorhergehenden Ansprüche, wobei die Übersichtsbeleuchtungsanordnung (60) im Betrieb den Zielbeleuchtungsbereich derart beleuchtet, dass ein niedrigster Beleuchtungsstärkewert in dem Zielbeleuchtungsbereich mindestens 90 % eines höchsten Beleuchtungsstärkewerts in dem Zielbeleuchtungsbereich beträgt.

11. Digitales Mikroskop (2) nach einem der vorhergehenden Ansprüche,
wobei das digitale Mikroskop (2) dazu ausgelegt ist, das Gesamtübersichtsbild der Probe durch Zusammensetzen von 2 bis 6, insbesondere durch Zusammensetzen von 3 bis 5, Teilübersichtsbildern (70) der Probe zu erzeugen.

12. Verfahren zum Erzeugen eines Gesamtübersichtsbildes einer Probe in einem digitalen Mikroskop (2) nach einem der vorhergehenden Ansprüche, wobei das Verfahren aufweist:
Beleuchten der Probe mit der Mehrzahl von Übersichtsbeleuchtungs-LEDs (82);
Aufnehmen einer Mehrzahl von Teilübersichtsbildern (70) der Probe mit der Übersichtsdigitalkamera (68), wobei die Mehrzahl von Teilübersichtsbildern (70) eine einzelne Reihe von Teilübersichtsbildern der Probe darstellen; und
Erzeugen des Gesamtübersichtsbildes der Probe durch Zusammensetzen der Mehrzahl von Teilübersichtsbildern (70).

13. Verfahren nach Anspruch 12,
wobei die Mehrzahl von Teilübersichtsbildern (70) zwischen 2 und 6, insbesondere zwischen 3 und 5, Teilübersichtsbilder der Probe beträgt.

## Revendications

1. Microscope numérique (2), comprenant :
une platine (10) pour supporter un échantillon ;
un ensemble de génération d'image microscopique (20), comprenant :
un capteur d'image principal (21), dirigé vers la platine (10) pour prendre des images microscopiques de l'échantillon ;
un objectif de microscope (24), interposé entre la platine (10) et le capteur d'image principal (21) ; et
un ensemble d'éclairage principal (40), disposé pour éclairer l'échantillon sur la platine (10) ;
et
un ensemble de génération d'image de vue d'ensemble (60), comprenant :
une caméra numérique de vue d'ensemble (68), disposée sur un premier côté de la platine (10) et dirigée vers la platine (10), où la caméra numérique de vue d'ensemble (68) comprend un capteur d'image de vue d'ensemble (61) et des optiques de caméra de vue d'ensemble (65), les optiques de caméra de vue d'ensemble (65) ayant un axe central (66) ; et
un ensemble d'éclairage de vue d'ensemble (80) ;
**caractérisé en ce que** l'ensemble d'éclairage de vue d'ensemble (80) comprend une pluralité de LEDs d'éclairage de vue d'ensemble (82), où la pluralité de LEDs d'éclairage de vue d'ensemble (82) sont disposées sur un deuxième côté de la platine (10), opposé au premier côté, et où la pluralité de LEDs d'éclairage de vue d'ensemble (82) sont disposées autour de l'axe central (66) des optiques de caméra de vue d'ensemble (65) de la caméra numérique de vue d'ensemble (68)
où l'ensemble d'éclairage de vue d'ensemble (60), en fonctionnement, éclaire une zone d'éclairage cible, s'étendant sur 2.5 cm par 2.5 cm autour de l'axe central (66) des optiques de caméra de vue d'ensemble (65) sur la platine (10), de telle manière que la valeur d'éclairement la plus basse dans la zone d'éclairage cible soit au moins 80% de la valeur d'éclairement la plus élevée dans la zone d'éclairage cible,
où le microscope numérique (2) est configuré pour générer une image complète de vue d'ensemble d'un échantillon, placé sur une lame de microscope (12), en assemblant une pluralité d'images de vue d'ensemble partielle (70) de l'échantillon, prises par la caméra numérique de vue d'ensemble (68), et
où la pluralité d'images de vue d'ensemble partielle (70) sont une seule ligne d'images de vue d'ensemble partielle de l'échantillon.

2. Microscope numérique (2) selon la revendication 1,
où l'objectif de microscope (24) possède un axe central (26) et où l'axe central (26) de l'objectif de microscope (24) est décalé par rapport à l'axe central (66) des optiques de caméra de vue d'ensemble (65) ;
et/ou
où l'objectif de microscope (24) et les optiques de caméra de vue d'ensemble (65) ont des positions relatives fixes.

3. Microscope numérique (2) selon une quelconque des revendications précédentes, où le microscope numérique (2) est un microscope à transmission de lumière.

4. Microscope numérique (2) selon une quelconque des revendications précédentes, où la pluralité de LEDs d'éclairage de vue d'ensemble (82) sont disposées autour de l'axe central (66) des optiques de caméra de vue d'ensemble (65) de manière symétrique en rotation.

5. Microscope numérique (2) selon une quelconque des revendications précédentes, où la pluralité de LEDs d'éclairage de vue d'ensemble (82) sont disposées le long d'un contour circulaire ou le long d'un contour elliptique ou le long d'un contour polygonal autour de l'axe central (66) des optiques de caméra de vue d'ensemble (65).

6. Microscope numérique (2) selon une quelconque des revendications précédentes,
où la pluralité de LEDs d'éclairage de vue d'ensemble (82) sont espacées de l'axe central (66) des optiques de caméra de vue d'ensemble (65) d'entre 10 mm et 40 mm, en particulier d'entre 15 mm et 30 mm ;
et/ou
où la pluralité de LEDs d'éclairage de vue d'ensemble (82) sont espacées de la platine (10) d'entre 20 mm et 60 mm, en particulier d'entre 30 mm et 50 mm.

7. Microscope numérique (2) selon une quelconque des revendications précédentes, où la pluralité de LEDs d'éclairage de vue d'ensemble (82) sont au nombre de 3 à 20 LEDs d'éclairage de vue d'ensemble, en particulier entre 4 et 12 LEDs d'éclairage de vue d'ensemble.

8. Microscope numérique (2) selon une quelconque des revendications précédentes, où la pluralité de LEDs d'éclairage de vue d'ensemble (82) sont disposées dans un boîtier d'ensemble d'éclairage, où la pluralité de LEDs d'éclairage de vue d'ensemble sont en particulier disposées le long d'une portion périphérique du boîtier de l'ensemble d'éclairage.

9. Microscope numérique (2) selon une quelconque des revendications précédentes, où l'ensemble d'éclairage de vue d'ensemble (60) est dépourvu de source de lumière sur l'axe central (66) des optiques de caméra de vue d'ensemble (65).

10. Microscope numérique (2) selon une quelconque des revendications précédentes, où l'ensemble d'éclairage de vue d'ensemble (60), en fonctionnement, éclaire la zone d'éclairage cible de manière que la valeur d'éclairement la plus basse dans la zone d'éclairage cible soit au moins 90 % de la valeur d'éclairement la plus élevée dans la zone d'éclairage cible.

11. Microscope numérique (2) selon une quelconque des revendications précédentes,
où le microscope numérique (2) est configuré pour générer l'image complète de vue d'ensemble de l'échantillon en assemblant entre 2 et 6, en particulier en assemblant entre 3 et 5, images de vue d'ensemble partielle (70) de l'échantillon.

12. Procédé de génération d'une image complète de vue d'ensemble d'un échantillon dans un microscope numérique (2) selon une quelconque des revendications précédentes, le procédé comprenant :
éclairer l'échantillon avec la pluralité de LEDs d'éclairage de vue d'ensemble (82) ;
prendre une pluralité d'images de vue d'ensemble partielle (70) de l'échantillon avec la caméra numérique de vue d'ensemble (68), où la pluralité d'images de vue d'ensemble partielle (70) forment une seule ligne d'images de vue d'ensemble partielle de l'échantillon ; et
générer l'image complète de vue d'ensemble de l'échantillon en assemblant la pluralité d'images de vue d'ensemble partielle (70).

13. Procédé selon la revendication 12,
où la pluralité d'images de vue d'ensemble partielle (70) sont au nombre de 2 à 6, en particulier entre 3 et 5, images de vue d'ensemble partielle de l'échantillon.
